# EUROPÄISCHE PATENTSCHRIFT

(11) **EP 1 924 387 B1**
(45) Veröffentlichungstag und Bekanntmachung des Hinweises auf die Patenterteilung: **17.08.2011**
(21) Anmeldenummer: 06763022.8
(22) Anmeldetag: 09.08.2006
(51) Int. Cl.: B23K 10/00, G21B 3/00, H05H 1/32

(54) **VERFAHREN ZUR ERZEUGUNG VON WÄRMEENERGIE**
METHOD FOR PRODUCING THERMAL ENERGY
PROCEDE DE PRODUCTION D'ENERGIE THERMIQUE

(30) Priorität: 07.09.2005 EP 05019473
(43) Veröffentlichungstag der Anmeldung: 28.05.2008
(73) Patentinhaber: Purratio AG, 73765 Neuhausen a.d.F. (DE)
(72) Erfinder: REICHMANN, Richard, 70794 Filderstadt (DE); BARTH, Karl-Ludwig, 70794 Filderstadt (DE)
(74) Vertreter: Klocke, Peter
(86) Internationale Anmeldenummer: PCT/EP2006/007882
(87) Internationale Veröffentlichungsnummer: WO 2007/028471

(56) Entgegenhaltungen:
- EP-A- 0 393 465
- EP-A1- 0 919 317

## Beschreibung

Die Erfindung betrifft ein Verfahren zur Erzeugung von Wärmeenergie bei dem zu Fusionsprozessen fähige leichte Ausgangsstoffe durch Zufuhr von elektrischer Energie dissoziiert, ionisiert und anschließend zur Fusion gebracht werden.

Ein Verfahren zur Erzeugung einer Flamme mittels eines Plasmabogens bei dem Wasserdampf in Wasserstoff und Sauerstoff durch Zufuhr von elektrischer Energie dissoziiert und anschließend der Wasserstoff ionisiert wird, ist aus der EP 0 919 317 A1 bekannt und wird zum thermischen Bearbeiten von Metallen eingesetzt. Bei diesem Verfahren wird Wasserdampf über Düsen in einen Elektrodenraum gebracht und dort durch Zufuhr elektrischer Energie ein Plasmabogen gezündet. Bei einem handelsüblichen, auf diesem Verfahren basierenden Gerät wird ein pistolenförmiger Plasmabrenner, der über ein elektrisches Einspeisegerät, welches mit üblicher Netzspannung betrieben werden kann, mit elektrischer Energie versorgt. Im Inneren des Brennerrohres wird zwischen der Anodendüse und der Kathode ein elektrischer Bogen entzündet, der das dort befindliche Wasser zuerst in dampfförmigen Zustand und dann in Plasmazustand umwandelt. Die Wassermoleküle werden dabei dissoziiert und die Bestandteile ionisiert und treten als Plasmastrahl aus der Brennerdüse unter dem natürlich gebildeten Druck aus. Mit Hilfe dieses Plasmastrahls kann Metall geschnitten, geschweißt, gelötet und andere Thermobearbeitungen ausgeführt werden.

Grundsätzlich ist das Gerät dafür geeignet, jeden nicht brennbaren Stoff einschließlich des nicht rostenden und hochlegierten Stahls, Aluminiums, Titans, Ziegel, Beton, Keramik mit der Qualität eines Laserstrahls zu bearbeiten.

In der EP 463 089 B1 wird die so genannte kalte Fusion beschrieben, indem mittels Elektrolyse Deuteriumatome in ein Gittermaterial eingebracht werden, welches eine Kristallstruktur aufweist, die fähig ist, in der Kristallstruktur ohne Zerstörung des Gittermaterials durch Kernfusion Überschusswärme zu erzeugen. Dort sind, allerdings im Zusammenhang mit der Elektrolyse, die physikalischen Vorgänge bei verschiedenen Ausgangsstoffen und Reaktionsmaterialen beschrieben. Die dort beschriebenen Prozesse wurden in der Vergangenheit auch wissenschaftlich von anderen untersucht und gehören daher zum Standardwissen des auf diesem Gebiet tätigen Fachmannes.

Basierend auf diesem Vorschlag wurden in der Zwischenzeit vielfältige Versuche und Vorschläge gemacht, jedoch konnte, soweit ersichtlich, bisher kein Vorschlag in einer Form realisiert werden, der der Allgemeinheit in einer die bisherigen wesentlichen Energieträger wie Gas, Öl, Kohle oder auch Uran für die vielfältigen Anwendungsfälle der Energieerzeugung, sei es für die direkte Wärmeerzeugung, Stromerzeugung oder mechanischen Antrieb usw., als Ersatz zur Verfügung steht. Dies weder bei Großanlagen noch bei kleineren Anlagen für den Hausgebrauch.

Die EP 0 393 465 A2 beschreibt grundsätzlich ein Verfahren zur Herstellung einer Kernfusion, wobei zwischen zwei Elektroden ein Plasma aufrecht erhalten wird und wenigstens eine der Elektroden mit einer Oberfläche versehen ist, die aus Palladium, Titanium oder einer Eisen-Titanlegierung hergestellt ist. Die Elektrode wird mit einem Kühlmittel so gekühlt, dass Deuterium leicht in das reaktive Material absorbiert werden kann. Zusätzlich wird in die Reaktionskammer ein gasförmiges Material wie Deuterium oder eine Deuteriumzusammensetzung eingeblasen, um eine nukleare Schmelzreaktion an dem reaktiven Material zu erzeugen. Im wesentlichen wird dort ein Vorgang bei einem Niederdruckplasma beschrieben, bei dem eine Glimmentladung stattfindet.

Der vorliegenden Erfindung liegt daher die Aufgabe zugrunde, ein Verfahren vorzuschlagen, mit dem es möglich ist, unter Anwendung der kalten Fusion Überschusswärme auch in einer kleinen kompakten Einheit zu erzeugen.

Diese Aufgabe wird erfindungsgemäß durch ein Verfahren mit den Merkmalen des Hauptanspruchs gelöst. Weitere vorteilhafte Ausgestaltungen sind den Unteransprüchen zu entnehmen.

Gemäß der Erfindung wird zur Erzeugung der Wärmeenergie ein zwischen einer Kathode und einer Anode befindlicher Plasmabogen (bei dem die Polarität vertauscht werden kann) verwendet, in dem geeignete, zu Fusionsprozessen fähige leichte Ausgangsstoffe durch Zufuhr von elektrischer Energie in den Plasmazustand gebracht werden. Hierzu wird eine Kathode aus einem Metall verwendet, das geeignet ist, die im Plasma erzeugten Teilchen eindiffundieren zu lassen und im Metallgitter einen Fusionsprozess zu ermöglichen.

Der zwischen den Elektroden befindliche Plasmabogen wird üblicherweise mittels elektrischer Energie aufrecht erhalten. Der Plasmabogen wird in einer Atmosphäre aus einem Material aufrecht erhalten, das die für eine Kernfusion erforderlichen Ausgangsstoffe wie Wasserstoff-, Deuterium- oder Tritiumatome bzw. deren Ionen sowie Lithiumatome und -ionen enthält. Als Ausgangssubstanz kann dabei einfaches Wasser mit seinen natürlichen Isotopen oder auch zur Erhöhung des Wirkungsgrades schweres Wasser, deuteriertes Wasser Tritiumsubstituiertes Wasser und/oder Mischungen daraus mit normalem Wasser sein. Die erforderlichen leichten Ausgangsstoffe können als solches in fester, flüssiger oder gasförmiger Form bereitgestellt und dann in die Nähe des Plasmabogens gebracht werden. In gasförmiger Form kann es direkt eingeblasen werden, in flüssiger Form ist ein Zwischenschritt der Verdampfung, beispielsweise direkt durch die Wärme des Plasmabogens, erforderlich. In dem Plasmabogen werden diese Teilchen in den Plasmazustand gebracht und durch Betreiben mit einer entsprechenden Stromstärke, die oberhalb von 3 A liegt, in einer ausreichenden Menge erzeugt, um einen geeigneten (H⁺, D⁺, T⁺, Li⁺ ... und nicht O⁺ oder N⁺) Ionenstrom Richtung Kathode zu ermöglichen. Es ist zu erwarten, dass die Ionen nach Durchlaufen des Kathodenfalls mit einer bestimmten Auftreffenergie auf die Kathode auftreffen und die Ionendichte an der Kathode sehr hoch ist.

Damit ein Wärmeüberschuss überhaupt entstehen kann, ist die Kathode aus einem Material hergestellt, das ein Metallgitter aufweist, welches einen Fusionsprozess ermöglicht. Dabei kann entweder die Kathode vollständig aus diesem Material sein oder auch nur eine entsprechende Beschichtung aufweisen. Grundsätzlich dazu geeignete Materialien sind Metalle aus der Gruppe IIX und der Gruppe IV A des Periodensystems und deren Legierungen. Hierbei handelt es sich insbesondere um Palladium, Eisen, Kobalt, Nickel, Ruthenium, Rhodium, Osmium, Iridium, Titan, Zirkonium, Hafnium und deren Legierungen. Die zu der Kathode hin bewegten Teilchen diffundieren in das Gitter des Kathodenmaterials und bewirken dort den in der Literatur beschriebenen Kernfusionsprozess, bei dem Überschusswärme erzeugt wird. Diese kann über verschiedenste, dem Fachmann geläufige Arten abgeführt werden, beispielsweise in einfachster Form durch Abtransport der Wärme mittels eines flüssigen Mediums, so dass diese Wärme dann entweder direkt oder indirekt in vielfältiger Art und Weise in eine andere Energieform, wie beispielsweise elektrische oder mechanische Energie, umgewandelt werden kann.

Als besonders bevorzugt hat sich das Kathodenmaterial Palladium erwiesen, das sich in Folge seiner im Vergleich zu den anderen gegebenen Materialien hohen Elektronenaustrittsarbeit von 5,6 eV besonders gut eignet. Bei entsprechender Kühlung der Kathode kann damit viel eher ein durch die an der Kathode entstehende Hitze erzeugter Elektronenstrom über den Plasmabogen verhindert werden, da dieser für den Wärmeerzeugungsprozess nichts beiträgt bzw. diesen eher behindert, weil damit der in Richtung Kathode gewünschte Teilchenstrom zur Auslösung der Kernfusion in der Kathode nicht entsteht oder behindert wird. Um ähnliches mit anderen Materialien zu erreichen, bedarf es aufgrund der geringeren Austrittsarbeit eines wesentlich höheren Aufwandes an Kühlung, um den unerwünschten Elektrodenstrom aus der Kathode zu verhindern bzw. möglichst gering zu halten.

Die Form und das Volumen der Kathode sowie die dadurch fließende Stromdichte bestimmen die Menge an Wärme, die im Metall bei gegebenem elektrischen Potential erzeugt werden kann. Die Anode kann ebenfalls mit einem der vorstehend erwähnten Materialien überzogen oder aus diesen hergestellt sein, jedoch erscheint es ausreichend, hierfür ein beliebiges geeignetes Leitermaterial, wie Platin, Nickel, Kohlenstoff oder Kupfer, zu verwenden, das selbst nicht mit Komponenten des Prozesses reagiert, um die Bildung unerwünschter Reaktionen zu verhindern. Eine günstige Anodenkonfiguration zu einer großflächigen Wechselwirkung des Plasmas mit der Kathode ist anzustreben.

Gemäß einer weiteren bevorzugten Ausbildung wird das Plasma mit Stromimpulsen beaufschlagt. Diese Stromimpulse können entweder anstelle eines Dauerstromes oder zusätzlich zu diesem aufgebracht werden und bewirken eine kurzzeitige starke Erhöhung des Stromes und damit der Temperatur im Plasmabogen, so dass die gewünschten Teilchen in einer größeren Menge erzeugt werden und dadurch den vorstehend erwähnten Teilchenstrom in Richtung Kathode in einem Umfang bewirken, der dann mit dem Kathodenmaterial eine Kernfusion bewirkt, die mehr Wärmeenergie erzeugt als für den Betrieb des Plasmabogens erforderlich ist. Abhängig von den Stromstärken mit denen der Lichtbogen betrieben werden, können die Impulse im Bereich von µsec bis Sekunden dauern. Die Stromimpulse können, beispielsweise im Falle von Palladium, zur Erzeugung einer erforderlichen Temperatur eine Stromstärke von 60 A kurzzeitig, beispielsweise 1 µsec, betragen. Je nach Stromstärke und Impulsdauer lassen sich viele Wasserstoffionenisotope (H⁺, D⁺, T⁺, ...) oder andere geeignete Ionen (Li⁺) erzeugen, die dann für den Fusionsprozess zur Verfügung stehen, wobei selbstverständlich die Stromstärke so gewählt werden muss, dass das Kathodenmaterial nicht zerstört wird. Mit den Stromstößen wird dreierlei bewirkt: Einerseits die vorstehend erwähnte kurzzeitige Erhitzung für die Erzeugung der Teilchen D⁺, T⁺, andererseits die Verhinderung einer zu starken Erwärmung des thermisch trägen Kathodenmaterials mit dem unerwünschte Elektronenstrom und zusätzlich die Erhöhung der Fusionsprozesse, da diese im Palladium-Kristall bei hohen Strömen, schnellen Strömänderung und dadurch bedingt schnelle (µsec-Bereich) Potentialänderung im Festkörper und im Plasma besonders effektiv sind.

Gemäß einer weiteren Ausbildung des Verfahrens kann der Plasmabogen bei genügend häufiger Anzahl von Stromimpulsen pro Zeiteinheit anstelle eines Dauerstromes betrieben werden. Die Frequenz sollte dabei so hoch sein, dass das Bogenplasma im Nachglühen des vorangegangenen Impuls bereits den nächsten Impuls erhält, um diesen Betrieb ohne Dauerbetriebsspannung zu ermöglichen.

Gemäß einer bevorzugten Ausbildung werden die Stromimpulse über ein Hochspannungsnetzteil, welches einen Kondensator auflädt, und eine Schaltfunkenstrecke erzeugt, wobei vorzugsweise ein Kondensator mit einer hinreichend hohen Kapazität verwendet wird, um die nötigen Mindeststromstärken über die nötigen Impulsmindestzeiten aufrecht zu erhalten.

Des weiteren kann vorteilhafterweise dem Plasmabogen eine zusätzliche Energieeinkopplung in Form von Hochfrequenz (HF) überlagert werden. Erfolgt die HF-Einkopplung bei der Ionenplasmafrequenz ω (i = H⁺, D⁺, T⁺) der jeweiligen Wasserstoffisotope bzw. anderer zur Fusion geeigneter Isotope, so kann gezielt deren Energie erhöht werden, um den Fusionsprozess vorteilhaft zu beeinflussen. Wird die Frequenz ω des angelegten HF_Feldes derart gewählt, dass sie unter der jeweiligen Ionenplasmafrequenz ω liegt, lässt sich zwischen dem Plasma und der Kathodenoberfläche eine HF-Randschicht erzeugen, welche einen energetischen Ionenbeschuss der Kathoden-Palladiumoberfläche mit Ionenenergien von einigen 100eV bis 1000eV ermöglicht und den Fusionsprozess verstärkt. Intrinsische Potentialänderungsvorgänge, wie der intrinsische hochfrequente Sägezahnmodus eines Plasma Torchs sind zum Aufbau der Randschicht ebenfalls geeignet.

Die Fusionsprozesse werden durch die hochfrequente schnelle Änderung aller im Plasma und im Festkörper existierenden Potentialverhältnisse im µs-Bereich vorteilhaft beeinflusst. Dies kann durch von außen angelegte Potentiale passieren oder durch intrinsische Potentialänderungsvorgänge, wie der intrinsische hochfrequente Sägezahnmodus eines Plasma Torchs.

Die Fusionsprozesse werden besonders effektiv, wenn die Abfolge des Aufpralls der energiereichen Wasserstoffisotopionen und die schnelle Änderung der Potentialverhältnisse (im Festkörper als auch in Plasma) im µsec Bereich in einer bestimmten zeitlichen Beziehung zueinander stehen, speziell wenn die Ereignisse nahezu gleichzeitig erfolgen.

Gemäß einer weiteren Ausbildung kann die Kathode, vorzugsweise aus Palladium, zuerst mit einem bestimmten Wasserstoffisotop sequenziell beladen und anschließend mit einem anderen zur Fusion geeigneten Isotop beschossen werden, um z. B. spezielle Reaktionen wie D-D oder D-T gezielt auszulösen.

Mit seiner bevorzugten Ausbildung wird das Kathodenmaterial gekühlt. Dies kann durch entsprechende Kühlung des Materials, sofern es sich nur an der Oberfläche befindet als auch durch Kühlung der gesamten Kathode erfolgen. So kann beispielsweise die Kathode durch den Ausgangsstoff gekühlt werden, welcher dann verdampft und ins Plasma gebracht wird. Genauso ist eine aktive Kühlung der Kathode und ein anderweitiges Einbringen der Ausgangsstoffe in das Plasma möglich. Der Fusionsprozess wird dabei besonders effektiv, wenn die Kathode auf niederen optimalen Temperaturen gehalten wird. Vorzugsweise werden die Bedingungen für einen Elektronenstrom aus dem Kathodenmaterial so eingestellt, dass der Elektronenstrom minimal wird. Dies kann durch die Auswahl entsprechender Materialien, wie vorzugsweise Palladium oder andere für die Fusion geeignete Materialien mit möglichst hoher Austrittsarbeit und entsprechender Kühlung erreicht werden.

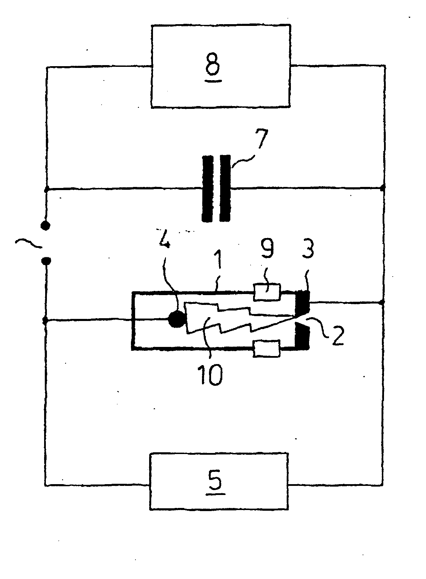

Wie bereits erwähnt kann die Abführung der Überschussenergie auf vielfältige, dem Fachmann geläufige Art und Weise erfolgen. Die einzige Figur zeigt den prinzipiellen Aufbau einer beispielhaften Anordnung zur Durchführung des Verfahrens, wobei hier die Überschussenergie in Form einer Flamme abgeführt wird. In einer Brennkammer 1 mit über eine Isolation 9 von einander isolierten Anode 3 und Kathode 4 befindet sich ein dafür geeignetes Medium, wie beispielsweise Wasserdampf. Es ist allgemein aus der Literatur bekannt, dass zum Stabilisieren des Plasmabogens der Wasserdampf drallartig in die Brennkammer 1 eingeführt werden muss. Die Anode 3 weist eine Austrittsdüse 2 für eine von dem Plasmabogen 10 erzeugte Flamme auf. Die Austrittsdüse kann entsprechend der Anwendung eine geeignete Ausbildung haben (z.B. Lavaldüse).

Die Elektroden sind mit einem Schaltnetzteil 5 verbunden, welches die nötige Energie für den Plasmabogen im Standardbetriebsmodus zur Verfügung stellt. Parallel zu dem Schaltnetzteil 5 sind über eine Funkenstrecke ein Kondensator oder eine Kondensatorbatterie 7 und ein Hochspannungsnetzteil 8 angeschlossen.

Versuchsweise wurde mit einem handelsüblichen Gerät der Firma Multiplaz AG (Multiplaz 2500), das als Gerät zur Thermobearbeitung wie eingangs beschrieben, angeboten wird, das erfindungsgemäße Verfahren durchgeführt. Bei diesem Gerät wird Wasser verwendet und der Plasmabogen mit einer Sägezahnspannung aufrecht erhalten (Sägezahnspannung mit einem DC-Anteil von ca. 150 V mit maximal 250 V, Frequenz ca. 25 kHz, Ausgangsstrom maximal ca. 8-10 A). Durch zusätzlichen Einbau eines Hochspannungsnetzteils 8, welches einen Kondensator 7 von 1 µF mit einer Spannung auflädt, werden über eine Schaltfunkenstrecke 8 zusätzlich zur Betriebsspannung Stromimpulse erzeugt, die in dem Plasma einen Stromimpuls mit einer geeigneten Stromstärke, beispielsweise bei einer mit Palladium versehenen Kathode mit 60 A, bei ca. 1-2 µsec Dauer zur Folge haben. Damit konnte eine wesentlich höhere Ausgangsleistung erzeugt werden, als für die Erzeugung erforderlich war.

Mittels diesem Verfahren ist es möglich kostengünstig Wärme zu erzeugen und das Verfahren überall dort anzuwenden, wo bisher fossile und/oder nachwachsende und/oder chemische Brennstoffe zum Einsatz kommen, um die Wärmeenergie direkt oder durch Umwandlung in andere nutzbare Energieformen (mechanische Energie, elektrische Energie) zu nutzen.

## Patentansprüche

1. Verfahren zur Erzeugung von Wärmeenergie mit den folgenden Merkmalen:
- Vorsehen einer Brennkammer (1) mit einer Anode (3) und einer Kathode (4), aus einem Material, das ein Metallgitter aufweist,
- Verwenden eines metallischen Kathodenmaterials, das geeignet ist, im Metallgitter einen Fusionsprozeß zu ermöglichen,
- Vorsehen einer gasförmigen Atmosphäre in der Brennkammer (1) aus einem Material, das die für eine Kernfusion erforderlichen leichten Ausgangsstoffe enthält,
- Erzeugen eines Plasmabogens (10) durch Zufuhr von elektrischer Energie zwischen den Elektroden (3, 4),
- hochfrequente Änderung der im Plasma und im Kathodenmaterial existierenden Potentialverhältnisse, vorzugsweise im µs-Bereich, und
**gekennzeichnet durch**:
- Vorsehen einer Austrittsdüse (2) an der Anode (3) für den Austritt einer vom Plasmabogen (10) erzeugten Flamme.

2. Verfahren nach Anspruch 1, **dadurch gekennzeichnet, dass** zur Erzeugung des gewünschten Plasmazustandes eine Stromstärke von ≥ 3 A verwendet wird.

3. Verfahren nach Anspruch 2 **dadurch gekennzeichnet dass** Impulse mit einer Stromstärke und einer Impulsbreite verwendet werden, die ausreichend ist, um über einen hinreichend langen Zeitraum Temperatur- und Dichtebedingungen zur Erzeugung der Teilchen in Plasma aufrecht zu erhalten.

4. Verfahren nach einem der vorangegangenen Ansprüche, **dadurch gekennzeichnet dass** der Plasmabogen bei genügend häufiger Anzahl von Stromimpulsen pro Zeiteinheit anstelle eines Dauerstromes betrieben wird.

5. Verfahren nach einem der vorangegangenen Ansprüche, **dadurch gekennzeichnet, dass** die Stromimpulse über ein Hochspannungsnetzteil, welches ein Kondensator auflädt, und eine Schaltfunkenstrecke erzeugt wird.

6. Verfahren nach einem der vorangegangenen Ansprüchen, **dadurch gekennzeichnet, dass** dem Plasmabogen eine zusätzliche Energieeinkopplung in Form von Hochfrequenz, vorzugsweise bei oder unterhalb der jeweiligen Ionenplasmafrequenz, überlagert wird.

7. Verfahren nach Anspruch 6, **dadurch gekennzeichnet, dass** die Kathode, vorzugsweise aus Palladium, sequenziell mit einem bestimmten Wasserstoffisotop geladen und anschließend mit einem anderen zur Fusion geeigneten Isotop beschossen wird.

8. Verfahren nach einem der vorangegangenen Ansprüchen, **dadurch gekennzeichnet, dass** die Bedingungen für einen Elektronenstrom aus dem Kathodenmaterial so eingestellt werden, dass der Elektronenstrom minimal wird.

## Claims

1. Method for producing thermal energy with the following characteristics:
-- provision of a combustion chamber (1) with an anode (3) and a cathode (4) made from a material comprising a metal grid,
-- use of a metallic cathode material that is suitable for making a fusion process in the metal grid possible,
-- provision of a gaseous atmosphere, in the combustion chamber (1), of a material that contains the light initial materials required for a nuclear fusion,
-- generation of a plasma arc (10) by providing electrical energy between the electrodes (3, 4),
-- high-frequency change, preferably in the µsec range, of the potential conditions, voltages, and currents existing in the plasma and in the cathode material, and **characterized by**
-- provision of an outlet nozzle (2) at the anode (3) as outlet of a flame generated by the plasma arc (10).

2. Method as claimed in claim 1, **characterized in that** an amperage of ≥ 3 A is used for producing the desired plasma state.

3. Method as claimed in claim 2, **characterized in that** pulses with an amperage and a pulse width are used that are sufficient for sustaining temperature and density conditions for generating the particles in the plasma over a period of sufficient length.

4. Method as claimed in any of the preceding claims, **characterized in that**, instead of a permanent current, the plasma arc is operated at a sufficiently frequent number of current pulses per unit of time.

5. Method as claimed in any of the preceding claims, **characterized in that** the current pulses are generated via a high voltage power supply that charges a capacitor, and a control spark gap.

6. Method as claimed in any of the preceding claims, **characterized in that** additional energy in the form of high frequency, preferably at or below the ion plasma frequency in the individual case, is superimposed on the plasma arc.

7. Method as claimed in claim 6, **characterized in that** the cathode, preferably a palladium cathode, is sequentially loaded with a certain hydrogen isotope and is then bombarded with a different isotope that is suitable for fusion.

8. Method as claimed in any of the preceding claims, **characterized in that** the conditions for an electron flow from the cathode material are selected to reduce the electron flow to a minimum.

## Revendications

1. Procédé de production d'énergie thermique présentant les caractéristiques suivantes :
- fourniture d'une chambre de combustion (1) avec une anode (3) et une cathode (4) dans un matériau qui présente une grille métallique,
- utilisation d'un matériau de cathode métallique apte à permettre un processus de fusion dans la grille métallique,
- fourniture d'une atmosphère gazeuse dans la chambre de combustion (1) à base d'un matériau qui contient les produits de départ légers nécessaires à une fusion nucléaire,
- production d'un arc de plasma (10) par amenée d'énergie électrique entre les électrodes (3, 4),
- variation à haute fréquence des conditions de potentiel existantes dans le plasma et le matériau de cathode, de préférence dans le domaine des µs,
**caractérisé par** :
- fourniture d'une tuyère de sortie (2) sur l'anode (3) pour la sortie d'une flamme produite par l'arc de plasma (10).

2. Procédé selon la revendication 1, **caractérisé en ce qu'**une intensité de courants 3 A est utilisée pour produire l'état de plasma souhaité.

3. Procédé selon la revendication 2, **caractérisé en ce que** l'on utilise des impulsions d'une intensité de courant et d'une largeur d'impulsion qui sont suffisantes pour maintenir pendant un intervalle de temps suffisamment long des conditions de température et de densité permettant de produire les particules dans le plasma.

4. Procédé selon une des revendications précédentes, **caractérisé en ce que** l'arc de plasma est utilisé à la place d'un courant permanent en cas de nombre suffisamment fréquent d'impulsions de courant par unité de temps.

5. Procédé selon une des revendications précédentes, **caractérisé en ce que** les impulsions de courant sont produites au moyen d'une alimentation à haute tension qui charge un condensateur et d'un éclateur de commutation.

6. Procédé selon une des revendications précédentes, **caractérisé en ce qu'**une injection d'énergie supplémentaire sous la forme d'une haute fréquence, de préférence égale ou inférieure à la fréquence de plasma ionique respective, est superposée à l'arc de plasma.

7. Procédé selon la revendication 6, **caractérisé en ce que** la cathode, de préférence en palladium, est chargée séquentiellement avec un certain isotope d'hydrogène et ensuite bombardée avec un autre isotope apte à la fusion.

8. Procédé selon une des revendications précédentes, **caractérisé en ce que** les conditions pour un courant d'électrons en provenance du matériau de cathode sont réglées de façon que le courant d'électrons devienne minimal.
